# EUROPEAN PATENT SPECIFICATION

(11) **EP 3 293 641 B1**
(45) Date of publication and mention of the grant of the patent: **17.06.2020**
(21) Application number: 16789273.6
(22) Date of filing: 21.04.2016
(51) Int. Cl.: G06F 16/2453, G06F 16/28

(54) **DATA PROCESSING METHOD AND SYSTEM**
DATENVERARBEITUNGSVERFAHREN UND -SYSTEM
PROCÉDÉ ET SYSTÈME DE TRAITEMENT DE DONNÉES

(30) Priority: 04.05.2015 CN 201510222356
(43) Date of publication of application: 14.03.2018
(73) Proprietor: Alibaba Group Holding Limited, Grand Cayman (KY)
(72) Inventor: HAN, Min, Hangzhou 310099 (CN)
(74) Representative: Kunz, Herbert
(86) International application number: PCT/CN2016/079812
(87) International publication number: WO 2016/177279

(56) References cited:
- CN-A- 102 236 581
- CN-A- 102 314 336
- CN-A- 102 456 031
- CN-A- 104 331 464
- JP-A- 2010 092 222
- US-A1- 2012 304 186
- US-B1- 7 756 919

## Description

### Technical Field

The present application relates to the field of big data technologies, and in particular, to a data processing method and system.

### Background Art

With development of computer technologies, the volume of data that needs to be processed by a computer is increasingly large, and a single computer has been unable to process large-scale data. Therefore, a technology of constructing a computer cluster by combining several computers to process large-scale data in parallel is developed.

A Hadoop distributed cluster system architecture is such a system architecture. A Hadoop system can construct a computer cluster by using a large number of cheap computers, and replace an expensive high-computing speed computer with this cluster to perform high-speed computation and storage. The Hadoop system mainly includes a distributed file system and a MapReduce system. The distributed file system manages and stores data. The MapReduce system computes data input by the distributed file system, mainly including: decomposing a to-be-processed data set into a plurality of data blocks; mapping each piece of original key-value pair data in each data block, to obtain intermediate result key-value pair data corresponding to each piece of original key-value pair data; and after intermediate result key-value pair data corresponding to all original key-value pair data is obtained, correspondingly reducing all intermediate result key-value pair data to obtain corresponding final result key-value pair data.

In the above processing manner, a big task may be divided into a large number of small tasks and the small tasks are executed by a large number of computers (also referred to as task executors) in a distributed system. In this way, quick processing on mass data can be implemented. This processing manner still does not reduce total computing resources, but distributes a large number of required computing resources to a large number of computers, thus greatly compressing the required processing time. This processing manner is suitable for an offline scenario insensitive to time. For an online service scenario, e.g., an instant messaging scenario, it is generally required that mass data processing is accomplished and a result is output in a short time; therefore, it is sensitive to time.

In the process of implementing the present application, the inventor finds that the prior art has at least the following problem:
In an online service scenario sensitive to time, a large number of computer resources are still occupied to accomplish processing on mass data, that is, the volume of processed data is still huge. Therefore, the process in which the Hadoop system processes data consumes a long time, such that it takes a long time for a service system to call the Hadoop system and wait for a data processing result, execution efficiency is low, and the specific requirement of smooth services cannot be met, thereby resulting in poor user experience.

Therefore, on the basis of research on the existing data processing method, the inventor provides a data processing method and system having high execution efficiency and desirable user experience.

US 2012/3041186 A1 describes techniques for scheduling one or more MapReduce jobs in the presence of one or more priority classes. The techniques include obtaining a preferred ordering for one or more MapReduce jobs, wherein the preferred ordering comprises one or more priority classes, prioritizing the one or more priority classes subject to one or more dynamic minimum slot guarantees for each priority class, and iteratively employing a MapReduce scheduler, once per priority class, in priority class order, to optimize performance of the one or more MapReduce jobs.

JP 2010 092222 A describes a cache structure that can effectively use a cache in Map-Reduce processing based on update frequency and a method for constructing a cache mechanism. The method includes that a plurality of data to be processed is grouped into a plurality of groups based on the update frequency of each of the data. The method further includes a step of calculating the group update frequency, which is the update frequency of each of the plurality of groups, based on the data update frequency which is the update frequency of the data constituting each of the plurality of groups, generating a partial result of a Map-Reduce processing stage for a group whose update frequency is equal to or less than a threshold, and caching the generated partial result.

### Summary of the Invention

Embodiments of the present application provide a data processing method and apparatus having high execution efficiency and desirable user experience. The data processing method and apparatus are defined by the appended claims.

The data processing method and system provided in the embodiments of the present application has at least the following beneficial effects:
The data processing system pre-processes hotspot key-value pairs to facilitate calling by a service system, while non-hotspot key-value pairs are processed only when being called by the service system, which thus reduces the volume of data that needs to be processed in real time by the data processing system providing a back-end service for the service system, improves execution efficiency of data processing, reduces the time of the service system waiting for a data processing result, and has smooth service processing and desirable user experience.

### Brief Description of the Drawings

The accompanying drawings described herein are used to provide further understanding of the present application, and constructs a part of the present application. Exemplary embodiments of the present application and illustrations thereof are used to explain the present application, and are not intended to pose improper limitation to the present application. In the accompanying drawings:
FIG. 1 is a flowchart of a data processing method according to an embodiment of the present application;
FIG. 2 is a flowchart of selecting a part of mapping key-value pairs as hotspot key-value pairs according to an embodiment of the present application; and
FIG. 3 is a schematic structural diagram of a data processing system according to an embodiment of the present application.

### Detailed Description

To solve the following technical problems in the existing data processing method: long data processing time, low execution efficiency, incapability of meeting the specific requirement of smooth services, and poor user experience, embodiments of the present application provide a data processing method and a corresponding system. In the method and the corresponding system, a data processing system pre-processes hotspot key-value pairs to facilitate calling by a service system, while non-hotspot key-value pairs are processed only when being called by the service system, which thus reduces the volume of data that needs to be processed in real time by the data processing system providing a back-end service for the service system, improves execution efficiency of data processing, reduces the time of the service system waiting for a data processing result, and has smooth service processing and desirable user experience.

To make objectives, technical solutions and advantages of the present application more comprehensible, technical solutions of the present application are described clearly and completely in the following through specific embodiments of the present application and corresponding accompanying drawings. Apparently, the described embodiments are merely some of rather than all of the embodiments of the present application.

A Hadoop system may include:
a client terminal JobClient configured to submit a Map-Reduce job;
a job tracker JobTracker which is a Java process and configured to coordinate running of the whole job;
a task tracker TaskTracker which is a Java process and configured to run a task of the job; and
a Hadoop Distributed File System (HDFS) configured to share a file related to the job between processes.

A job process of the Hadoop system may include:

### 1. Task submission

The client terminal requests a new job code from the job tracker, creates a new job instance, and calls a submitJob function.

### 2. Task initialization

When receiving calling of the submitJob function, the job tracker acquires and initializes a task. The job tracker creates a task, and assigns a task code.

### 3. Task assignment

The job tracker assigns the task to the task tracker.

### 4. Task execution

After being assigned with a task, the task tracker starts to run the task. During mapping, the task tracker calls a map function to process the task, that is, process original key-value pairs to generate intermediate result key-value pairs, and outputs the intermediate result key-value pairs according to a sequence of key values. Then, the task tracker calls a reduce function to process the intermediate result key-value pairs to generate final result key-value pairs.

### 5. Task end

After obtaining a report of the task tracker indicating that all tasks run successfully, the job tracker ends the job.

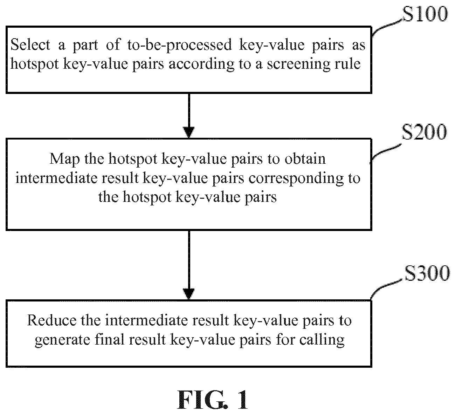

FIG. 1 is a flowchart of a data processing method according to an embodiment of the present application, specifically including the following steps:
S100: A part of to-be-processed key-value pairs are selected as hotspot key-value pairs according to a screening rule.

Data is embodied as an attribute and a numerical value that describe data properties, that is, a commonly described key-value pair. The key-value pair includes a key value representing an attribute and a key value representing attribute content. The attribute content includes, but is not limited to, a list, a hash map, a character string, a numerical value, a Boolean value, an ordered list array, a null value, and the like. For example, {"name": "Wang Xiao'er"} denotes data of a person whose "name" is "Wang Xiao'er".

In a specific embodiment, the step of selecting a part of to-be-processed key-value pairs as hotspot key-value pairs according to a screening rule specifically includes that: several to-be-processed key-value pairs may be selected randomly as the hotspot key-value pairs. In fact, judging whether a to-be-processed key-value pair is a hotspot key-value pair is a complex process, especially when there are millions of or even hundreds of millions of to-be-processed key-value pairs. In the embodiment of the present application, the data processing system randomly selects several to-be-processed key-value pairs as hotspot key-value pairs, thereby simplifying the process of judging whether a to-be-processed key-value pair is a hotspot key-value pair, and improving the data processing efficiency of the method.

The hotspot key-value pairs are pre-processed for calling by a service system, while non-hotspot key-value pairs are processed only when being called by the service system, which thus reduces the volume of data that needs to be processed in real time by the data processing system providing a back-end service for the service system, improves execution efficiency of data processing, reduces the time of the service system waiting for a data processing result, and has smooth service processing and desirable user experience.

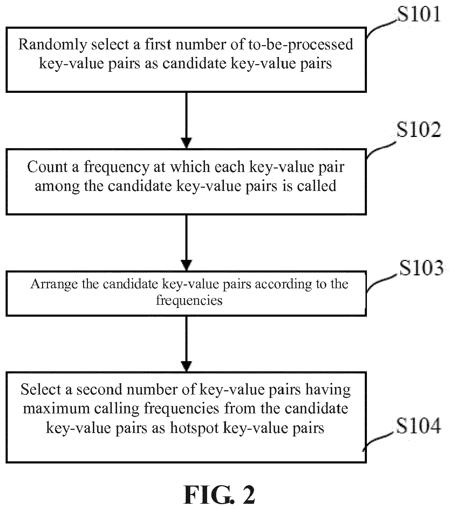

In another specific embodiment, referring to FIG. 2, the step of selecting a part of to-be-processed key-value pairs as hotspot key-value pairs according to a screening rule specifically includes:
S101: A first number of to-be-processed key-value pairs are selected randomly as candidate key-value pairs.
S102: A frequency at which each key-value pair among the candidate key-value pairs is called is counted.
S103: The candidate key-value pairs are arranged according to the frequencies.
S104: A second number of key-value pairs having maximum calling frequencies are selected from the candidate key-value pairs as hotspot key-value pairs.

The first number is greater than the second number.

In the embodiment of the present application, first, the data processing system randomly selects a first number of mapping key-value pairs as candidate key-value pairs. The first number generally corresponds to a specific service. A numerical value of the first number may be a fixed value set according to historical experience, and may also be a numerical value generated by a computer through dynamic adjustment and changes.

Then, the data processing system counts a frequency at which each key-value pair among the candidate key-value pairs is called, and arranges the candidate key-value pairs according to the frequencies. In a specific service activity, it is generally required to call a number of key-value pairs to support the service system. In this case, the data processing system tracks and records the frequency at which each key-value pair is called, i.e., the number of times each key-value pair is called within a period of time. Further, the data processing system may further arrange the key-value pairs according to the calling frequencies from large to small.

Next, the data processing system selects a second number of key-value pairs having maximum calling frequencies from the candidate key-value pairs as hotspot key-value pairs. The first number is greater than the second number. Likewise, a numerical value of the second number may be a fixed value set according to historical experience, and may also be a numerical value generated by the data processing system through dynamic adjustment and changes. The frequencies at which the selected hotspot key-value pairs are called greater than the frequencies at which other candidate key-value pairs are called. The data processing system pre-processes the hotspot key-value pairs, instead of pre-processing other candidate key-value pairs. A probability that the pre-processed key-value pairs are called is greater than a probability that other key-value pairs are called. Therefore, the volume of data that needs to be processed in real time by the data processing system providing a back-end service for the service system is reduced, execution efficiency of data processing is improved, the time of the service system waiting for a data processing result is reduced, service processing is smooth, and user experience is desirable.

Further, in the embodiment of the present application, the step of selecting a part of mapping key-value pairs as hotspot key-value pairs further includes:
setting a service category condition set of candidate key-value pairs before the step of randomly selecting a first number of to-be-processed key-value pairs as candidate key-value pairs; and
selecting to-be-processed key-value pairs meeting the service category condition set.

In the embodiment of the present application, the service category condition set may be a fixed value set according to historical experience, and may also be generated through dynamic adjustment and changes. In fact, a key-value pair called by a service system of a service activity generally has some specific properties to be distinguished from other service activities. For example, a key-value pair called by a service system for pushing information has its specific properties compared with a key-value pair called by a service system for payment. The service system for pushing information may be related to a key-value pair indicating the age of a receiver. For example, pushed information about wedding goods is generally junk information for receivers under the age of 16. When a service category condition set of the service system for pushing information includes a key-value pair indicating age, a desirable push effect may be achieved.

Therefore, a service category condition set of to-be-processed key-value pairs is set, and the data processing system may filter out a large number of to-be-processed key-value pairs through judgment on the service category condition set, thereby improving the selection precision of hotspot key-value pairs. Therefore, the volume of data that needs to be processed in real time by the data processing system providing a back-end service for the service system is reduced, execution efficiency of data processing is improved, the time of the service system waiting for a data processing result is reduced, service processing is smooth, and user experience is desirable.

In still another specific embodiment of the present application, the step of selecting a part of to-be-processed key-value pairs as hotspot key-value pairs according to a screening rule specifically includes:
setting a calling frequency threshold of the hotspot key-value pairs; and
when the frequency of a key-value pair being called is greater than the calling frequency threshold, setting the key-value pair as a hotspot key-value pair.

In the embodiment of the present application, a calling frequency of key-value pairs is set, and when the frequency of a key-value pair being called is greater than the calling frequency threshold, the data processing system sets the key-value pair as a hotspot key-value pair. The data processing system pre-processes the hotspot key-value pairs, instead of pre-processing other key-value pairs. A probability that the pre-processed key-value pairs are called is greater than a probability that other key-value pairs are called. Therefore, the volume of data that needs to be processed in real time by the data processing system providing a back-end service for the service system is reduced, execution efficiency of data processing is improved, the time of the service system waiting for a data processing result is reduced, service processing is smooth, and user experience is desirable.

S200: The hotspot key-value pairs are mapped to obtain intermediate result key-value pairs corresponding to the hotspot key-value pairs.

In an embodiment provided in the present application, the client terminal JobClient submits a Map-Reduce job to the job tracker, creates a new job instance, and calls a submitJob function. When receiving calling of the submitJob function, the job tracker acquires and initializes a task. The job tracker creates a task, and assigns a task code. The job tracker assigns the task to the task tracker. After being assigned with a task, the task tracker starts to run the task. During mapping, the task tracker calls a map function to process the task, that is, process original key-value pairs to generate intermediate result key-value pairs, and outputs the intermediate result key-value pairs according to a sequence of key values.

S300: The intermediate result key-value pairs are reduced to generate final result key-value pairs for calling.

In this step, the task tracker calls a reduce function to process the intermediate result key-value pairs to generate final result key-value pairs. After obtaining a report of the task tracker indicating that all tasks run successfully, the job tracker stores the final result key-value pairs in the HDFS, and ends the job.

In the embodiment of the present application, the data processing system pre-processes hotspot key-value pairs to facilitate calling by a service system, while non-hotspot key-value pairs are processed only when being called by the service system, which thus reduces the volume of data that needs to be processed in real time by the data processing system providing a back-end service for the service system, improves execution efficiency of data processing, reduces the time of the service system waiting for a data processing result, and has smooth service processing and desirable user experience.

In an embodiment provided in the present application, the method further includes:
optimizing the screening rule by using a machine learning model.

The machine learning model relates to artificial intelligence. In the embodiment of the present application, the screening rule is optimized by using a machine learning model. After the data processing system runs for a period of time, the accuracy of judging hotspot key-value pairs and non-hotspot key-value pairs may be significantly improved. Therefore, the volume of data that needs to be processed in real time by the data processing system providing a back-end service for the service system is reduced, execution efficiency of data processing is improved, the time of the service system waiting for a data processing result is reduced, service processing is smooth, and user experience is desirable.

The type of the machine learning model is selected according to a specific service system, and optimization of a machine learning model on the screening rule is introduced simply in the following.

Specifically, a distribution condition of frequencies of the key-value pairs being called vs. a single attribute is counted by using a clustering algorithm in the machine learning model.

According to the distribution condition of frequencies of the key-value pairs being called vs. a single attribute, an interval of key values of attribute content at which the frequencies of the key-value pairs being called are not less than a preset frequency threshold is selected.

The interval of key values of attribute content is set as a rule condition of the screening rule.

Illustration is made by still taking the above service system for pushing information as an example. Assume that the service system obtains by conducting statistics that services for pushing information exceed a preset proportion, e.g., 50%, and a key-value pair indicating the age of a receiver is called. The machine learning model optimizes the screening rule through a K-means clustering algorithm.

Assume that a sample set (key-value pairs indicating ages of receivers and frequencies at which the key-value pairs are called) is classified into m categories (frequency segments), the algorithm is described as follows:
(1) Initial centers (frequencies) of the m categories (frequency segments) are selected properly.
(2) In the k^{th} iteration, distances (frequency differences) from any sample (a key-value pair indicating the age of a receiver and a frequency at which the key-value pair is called) to m centers are obtained, and the sample (a key-value pair indicating the age of a receiver and a frequency at which the key-value pair is called) is classified into a category (frequency segment) where a center having the minimum distance is located.
(3) A central value (frequency) of the category (frequency segment) is updated by using an average method.
(4) For all the m central values (frequencies), if values thereof keep unchanged after being updated by using the iteration method of (2) and (3), the iteration ends; otherwise, the iteration continues.
(5) Initial centers (ages) of n categories (age groups) are selected properly for each category (frequency segment) in m categories (frequency segments).
(6) In the k^{th} iteration, distances (age differences) from any sample (a key-value pair indicating the age of a receiver and a frequency at which the key-value pair is called) to n centers are obtained, and the sample (a key-value pair indicating the age of a receiver and a frequency at which the key-value pair is called) is classified into a category (age group) where a center having the minimum distance is located.
(7) A central value (age) of the category (age group) is updated by using an average method.
(8) For all the n central values (ages), if values thereof keep unchanged after being updated by using the iteration method of (6) and (7), the iteration ends; otherwise, the iteration continues.

By using the algorithm, a clustering rule of to-be-processed key-value pairs having large calling frequencies vs. age may be obtained through calculation. That the age of the receiver is in a certain category (age group) is used as the rule condition of the screening rule. For example, that the age of the receiver is 12-18 is used as a rule condition of judging that the to-be-processed key-value pair is a hotspot key-value pair. After optimizing the screening rule by using the machine learning model, the service system screens the hotspot key-value pairs from the to-be-processed key-value pairs according to the optimized screening rule.

In the embodiment provided in the present application, a rule optimization module is further configured to:
when a key-value pair of an attribute and a key-value pair of another attribute are called by service systems having a same service code, set a union set of intervals of key values of attribute content of the key-value pairs of the two attributes as a rule condition of the screening rule.

Assume that the machine learning model further accomplishes optimization on the screening rule in the dimension of professions of receivers after accomplishing the optimization on the screening rule in the dimension of ages of the receivers.

The data processing system calculates that a to-be-processed key-value pair indicating that the receiver in in an age group and a to-be-processed key-value pair indicating that the receiver is of a profession are highly related to information pushing. For example, a to-be-processed key-value pair indicates that the receiver is in an age group of 20-30, a to-be-processed key-value pair indicates that the receiver is in the computer industry, and when the service system pushes information, desirable service promotion effects can be achieved for receivers having features of the two dimensions simultaneously. Then, the machine learning model associates the to-be-processed key-value pair indicating that the receiver is in the age group of 20-30 with the to-be-processed key-value pair indicating that the receiver is in the computer industry, to form a hotspot key-value pair data group.

The data processing system further ranks frequencies at which the hotspot key-value pair data groups are called by using the machine learning model, and classifies the hotspot key-value pair data groups into hotspot data groups and non-hotspot data groups. A dynamic adjusting mode of the hotspot data groups is: setting a calling frequency threshold of the hotspot data groups, and when the frequencies of key-value pairs in the data group being called are greater than the frequency threshold, setting the data group as a hotspot data group.

In the embodiment of the present application, a processing priority value of a data group is set. The priority value is obtained by calculating a weighted sum value of the to-be-processed key-value pairs. A processing priority of the data group is adjusted dynamically according to the priority value. When a key-value pair in the data group is called once, the priority value of the data group is increased by a unit. When a priority value of a data group exceeds a priority value of a previous data group thereof, the data processing system moves the data group one position ahead. Through optimization of the screening rule by using the machine learning model, the hotspot key-value pairs selected by the data processing system from the to-be-processed key-value pairs are mapping key-value pairs having maximum frequencies of being called, wherein hotspot data groups formed by associating the key-value pairs are data groups having maximum frequencies of being called. Therefore, the volume of data that needs to be processed in real time by the data processing system providing a back-end service for the service system is reduced, execution efficiency of data processing is improved, the time of the service system waiting for a data processing result is reduced, service processing is smooth, and user experience is desirable.

In an embodiment provided in the present application, the method further includes:
when a non-hotspot key-value pair is called, processing the non-hotspot key-value pair by using a reduce function to generate data for calling.

In the embodiment of the present application, the hotspot key-value pairs are pre-processed by the data processing system by using the reduce function, to generate data for calling by the service system. When the non-hotspot key-value pairs are called by the service system, the data processing system processes the key-value pairs by using the reduce function in real time, to generate data for calling by the service system. Therefore, the volume of data that needs to be processed in real time by the data processing system providing a back-end service for the service system is reduced, execution efficiency of data processing is improved, the time of the service system waiting for a data processing result is reduced, service processing is smooth, and user experience is desirable.

In an alternative manner of the embodiment of the present application, a data processing method includes the following steps:
mapping to-be-processed key-value pairs to obtain intermediate result key-value pairs corresponding to the to-be-processed key-value pairs;
selecting a part of the intermediate result key-value pairs as hotspot key-value pairs according to a screening rule; and
reducing the hotspot key-value pairs to generate final result key-value pairs for calling;
wherein the key-value pair includes a key value representing an attribute and a key value representing attribute content.

It should be pointed out that a difference from the specific embodiment provided in the foregoing lies in that: the step of selecting a part of key-value pairs as the hotspot key-value pairs is set to be performed after the mapping processing step. In the embodiment of the present application, the volume of data of key-value pairs of reducing processing is reduced, and the problem of large volume may be solved to some extent. Therefore, the volume of data that needs to be processed in real time by the data processing system providing a back-end service for the service system is reduced, execution efficiency of data processing is improved, the time of the service system waiting for a data processing result is reduced, service processing is smooth, and user experience is desirable.

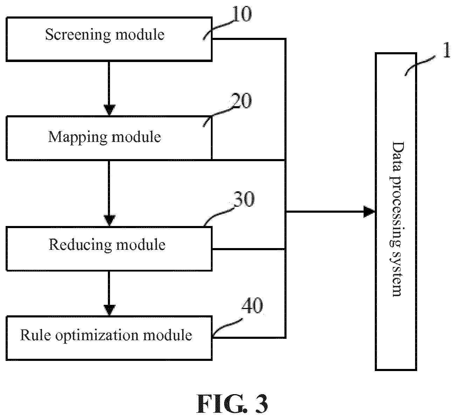

The data processing method according to the embodiments of the present application is described above. Based on the same thought, referring to FIG. 3, the present application further provides a data processing system 1, including:
a screening module 10 configured to select a part of to-be-processed key-value pairs as hotspot key-value pairs according to a screening rule;
a mapping module 20 configured to map the hotspot key-value pairs to obtain intermediate result key-value pairs corresponding to the hotspot key-value pairs; and
a reducing module 30 configured to reduce the intermediate result key-value pairs to generate final result key-value pairs for calling;
wherein the key-value pair includes a key value representing an attribute and a key value representing a numerical value.

Further, the screening module 10 configured to select a part of to-be-processed key-value pairs as hotspot key-value pairs is specifically configured to:
randomly select several to-be-processed key-value pairs as hotspot key-value pairs.

Further, the screening module 10 configured to select a part of to-be-processed key-value pairs as hotspot key-value pairs is specifically configured to:
randomly select a first number of to-be-processed key-value pairs as candidate key-value pairs;
count a frequency at which each key-value pair among the candidate key-value pairs is called;
arrange the candidate key-value pairs according to the frequencies; and
select a second number of key-value pairs having maximum calling frequencies from the candidate key-value pairs as hotspot key-value pairs;
wherein the first number is greater than the second number.

Further, the screening module 10 configured to select a part of mapping key-value pairs as hotspot key-value pairs is further specifically configured to:
set a service category condition set of candidate key-value pairs before the step of randomly selecting a first number of to-be-processed key-value pairs as candidate key-value pairs; and
select to-be-processed key-value pairs meeting the service category condition set.

Further, the screening module 10 configured to select a part of to-be-processed key-value pairs as hotspot key-value pairs is specifically configured to:
set a calling frequency threshold of the hotspot key-value pairs; and
when the frequency of a key-value pair being called is greater than the calling frequency threshold, set the key-value pair as a hotspot key-value pair.

Further, the system further includes a rule optimization module 40, configured to:
optimize the screening rule by using a machine learning model.

Further, the mapping module 20 is configured to:
map the non-hotspot key-value pairs to obtain intermediate result key-value pairs corresponding to the non-hotspot key-value pairs.

Further, a data processing system 1 includes:
a mapping module 20 configured to map to-be-processed key-value pairs to obtain intermediate result key-value pairs corresponding to the to-be-processed key-value pairs;
a screening module 10 configured to select a part of the intermediate result key-value pairs as hotspot key-value pairs according to a screening rule; and
a reducing module 30 configured to reduce the hotspot key-value pairs to generate final result key-value pairs for calling;
wherein the key-value pair includes a key value representing an attribute and a key value representing attribute content.

In the embodiment of the present application, the data processing system pre-processes hotspot key-value pairs to facilitate calling by a service system, while non-hotspot key-value pairs are processed only when being called by the service system, which thus reduces the volume of data that needs to be processed in real time by the data processing system providing a back-end service for the service system, improves execution efficiency of data processing, reduces the time of the service system waiting for a data processing result, and has smooth service processing and desirable user experience.

Persons skilled in the art should understand that, the embodiments of the present invention may be provided as a method, a system, or a computer program product. Therefore, the present invention may be implemented in the form of a complete hardware embodiment, a complete software embodiment, or an embodiment combining software and hardware. Moreover, the present invention may be a computer program product implemented on one or more computer usable storage media (including, but not limited to, a magnetic disk memory, a CD-ROM, an optical memory, and the like) including computer usable program code.

The present invention is described with reference to flowcharts and/or block diagrams according to the method, device (system) and computer program product according to the embodiments of the present invention. It should be understood that a computer program instruction may be used to implement each process and/or block in the flowcharts and/or block diagrams and combinations of processes and/or blocks in the flowcharts and/or block diagrams. These computer program instructions may be provided for a general-purpose computer, a special-purpose computer, an embedded processor, or a processor of another programmable numerical processing device to generate a machine, so that the instructions executed by a computer or a processor of another programmable numerical processing device generate an apparatus for implementing a specified function in one or more processes in the flowcharts and/or in one or more blocks in the block diagrams.

These computer program instructions may also be stored in a computer readable memory that can instruct the computer or another programmable numerical processing device to work in a particular manner, such that the instructions stored in the computer readable memory generate an article of manufacture that includes an instruction apparatus. The instruction apparatus implements a specified function in one or more processes in the flowcharts and/or in one or more blocks in the block diagrams.

These computer program instructions may also be loaded onto a computer or another programmable numerical processing device, such that a series of operating steps are performed on the computer or another programmable device, thereby generating computer-implemented processing. Therefore, the instructions executed on the computer or another programmable device provide steps for implementing a specified function in one or more processes in the flowcharts and/or in one or more blocks in the block diagrams.

In a typical configuration, a computing device includes one or more processors (CPU), an input/output interface, a network interface, and a memory.

The memory may include a volatile memory, a random access memory (RAM) and/or a non-volatile memory or the like in a computer readable medium, for example, a read only memory (ROM) or a flash RAM. The memory is an example of the computer readable medium.

The computer readable medium includes non-volatile and volatile media as well as movable and non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition of this text, the computer readable medium does not include transitory media, such as a modulated data signal and a carrier.

It should be further noted that, the term "include", "comprise" or other variations thereof are intended to cover non-exclusive inclusion, so that a process, method, commodity or device including a series of elements not only includes the elements, but also includes other elements not clearly listed, or further includes inherent elements of the process, method, commodity or device. Without more limitations, an element defined by "including a/an... " does not exclude that the process, method, commodity or device including the element further has other identical elements.

Those skilled in the art should understand that, the embodiments of the present application may be provided as a method, a system, or a computer program product. Therefore, the present application may be implemented in the form of a complete hardware embodiment, a complete software embodiment, or an embodiment combining software and hardware. Moreover, the present application may employ the form of a computer program product implemented on one or more computer usable storage media (including, but not limited to, a magnetic disk memory, a CD-ROM, an optical memory, and the like) including computer usable program code.

The above descriptions are merely embodiments of the present application, and are not intended to limit the present application. For those skilled in the art, the present application may have various modifications and variations.

## Claims

1. A data processing method, the method comprising:
pre-processing a plurality of hotspot key-value pairs, comprising:
selecting (S101) a first plurality of key-value pairs of a to-be-processed plurality of key-value pairs, wherein the first plurality is selected randomly as a candidate set of key-value pairs for determining the plurality of hotspot key-value pairs, wherein a key-value pair comprises a key value representing an attribute and a key value representing attribute content, wherein the first plurality of key-value pairs corresponds to a first service provided by a service system, wherein calls including one or more key-value pairs of the to-be-processed plurality of key-value pairs are received at a data processing system (1) from the service system;
counting (S102) a frequency at which a key-value pair among the candidate set is called, by the service system, within a period of time;
arranging (S103) the first plurality of key-value pairs according to the frequency;
selecting (S104) a second plurality of key-value pairs from the candidate set of key-value pairs as the plurality of hotspot key-value pairs according to a screening rule, wherein the second plurality of key-value pairs is with maximum calling frequencies, and wherein the first plurality is greater than the second plurality of key-value pairs;
mapping (S200) the plurality of hotspot key-value pairs to obtain intermediate result key-value pairs corresponding to the hotspot key-value pairs; and
reducing (S300) the intermediate result key-value pairs of the plurality of hotspot key-value pairs to generate final result key-value pairs for calls received from the service system; the method further comprising:
processing a call from the service system at the data processing system, the call including a key-value pair from the to-be-processed plurality of key-value pairs which is not selected as being part of the plurality of hotspot key-value pairs, comprising:
mapping the key-value pair to obtain an intermediate result key-value pair corresponding to the key-value pair; and
reducing the intermediate result key-value pair to generate a final result key-value pair for the calls from the service system.

2. The method of claim 1, wherein selecting (S104) the second plurality of key-value pairs as the plurality of hotspot key-value pairs according to the screening rule further comprises:
setting a service category condition set of candidate key-value pairs before the step of randomly selecting the first plurality of key-value pairs of the to-be-processed plurality of key-value pairs as candidate key-value pairs; and
selecting to-be-processed key-value pairs from the to-be-processed plurality of key-value pairs meeting the service category condition set.

3. The method of claim 1, wherein selecting (S104) the second plurality of key-value pairs as the plurality of hotspot key-value pairs according to the screening rule comprises:
setting a calling frequency threshold of the hotspot key-value pairs; and
when frequency of a key-value pair being called is greater than the calling frequency threshold, setting the key-value pair as a hotspot key-value pair.

4. The method of any one of claims 1 to 3, wherein the method further comprises optimizing the screening rule by using a machine learning model, optionally comprising:
counting a distribution condition of frequencies of the key-value pairs being called vs. a single attribute by using a clustering algorithm in the machine learning model;
according to the distribution condition of frequencies of the key-value pairs being called vs. a single attribute, selecting an interval of key values of attribute content at which the frequencies of the key-value pairs being called are not less than a preset frequency threshold; and
setting the interval of key values of attribute content as a rule condition of the screening rule.

5. The method of claim 4, wherein the method further comprises:
when a key-value pair of an attribute and a key-value pair of another attribute are called by service systems having a same service code, setting a union set of intervals of key values of attribute content of the key-value pairs of the two attributes as a rule condition of the screening rule.

6. A data processing system (1), comprising:
a screening module (10) configured, in a pre-processing mode, to
select (S101) a first plurality of key-value pairs of a to-be-processed plurality of key-value pairs, wherein the first plurality is selected randomly as a candidate set of key-value pairs for determining a plurality of hotspot key-value pairs, wherein the first plurality of key-value pairs corresponds to a first service provided by a service system, wherein calls including one or more key-value pairs of the to-be-processed plurality of key-value pairs are received at a data processing system from the service system;
count (S102) frequency at which a key-value pair among the candidate set is called within a period of time by the service system(S 102);
arrange (S103) the first plurality of key-value pairs according to the frequency (S103);
select (S104) a second plurality of key-value pairs from the candidate set of key-value pairs as the plurality of hotspot key-value pairs according to a screening rule, wherein the second plurality of key-value pairs is with maximum calling frequencies;
a mapping module (20) configured, in the pre-processing mode, to map (S200) the plurality of hotspot key-value pairs to obtain intermediate result key-value pairs corresponding to the hotspot key-value pairs; and
a reducing module (30) configured, in the pre-processing mode, to reduce (S300) the intermediate result key-value pairs of the plurality of hotspot key-value pairs to generate final result key-value pairs for calls received from the service system;
wherein the key-value pair comprises a key value representing an attribute and a key value representing attribute content;
wherein the mapping module (20) is configured, in a processing mode, to process a call from the service system, the call including a key-value pair from the to-be-processed plurality of key-value pairs which is not selected as being part of the plurality of hotspot key-value pairs, and to map the non-hotspot key-value pair to obtain an intermediate result key-value pair corresponding to the key-value pair; and
wherein the reducing module (30) is configured, in the processing mode, to reduce the intermediate result key-value pair to generate a final result key-value pair for the calls from the service system.

7. The system (1) of claim 6, wherein the screening module (10) configured to select the plurality of key-value pairs as the plurality of hotspot key-value pairs is further configured to:
set a service category condition set of candidate key-value pairs before the step of randomly selecting the first plurality of key-value pairs of the to-be-processed plurality of key-value pairs as candidate key-value pairs; and
select to-be-processed key-value pairs from the to-be-processed plurality of key-value pairs meeting the service category condition set.

8. The system (1) of claim 6, wherein the screening module (10) configured to select the second plurality of key-value pairs as the plurality of hotspot key-value pairs is configured to:
set a calling frequency threshold of the hotspot key-value pairs; and
when frequency of a key-value pair being called is greater than the calling frequency threshold, set the key-value pair as a hotspot key-value pair.

9. The system (1) of any one of claims 6 to 8, wherein the system further comprises a rule optimization module (40) configured to:
optimize the screening rule by using a machine learning model.

10. The system (1) of claim 9, wherein the rule optimization module (40) is configured to:
count a distribution condition of frequencies of the key-value pairs being called vs. a single attribute by using a clustering algorithm in the machine learning model;
according to the distribution condition of frequencies of the key-value pairs being called vs. a single attribute, select an interval of key values of attribute content at which the frequencies of the key-value pairs being called are not less than a preset frequency threshold; and
set the interval of key values of attribute content as a rule condition of the screening rule.

11. The system (1) of claim 10, wherein the rule optimization module (40) is further configured to:
when a key-value pair of an attribute and a key-value pair of another attribute are called by service systems having a same service code, set a union set of intervals of key values of attribute content of the key-value pairs of the two attributes as a rule condition of the screening rule.

## Patentansprüche

1. Datenverarbeitungsverfahren, wobei das Verfahren Folgendes umfasst:
Vorverarbeiten einer Vielzahl von Hotspot-Schlüssel-Wertepaaren, Folgendes umfassend:
Auswählen (S101) einer ersten Vielzahl von Schlüssel-Wert-Paaren einer zu verarbeitenden Vielzahl von Schlüssel-Wert-Paaren, wobei die erste Vielzahl zufällig als ein Kandidatensatz von Schlüssel-Wert-Paaren zur Bestimmung der Vielzahl von Hotspot-Schlüssel-Wert-Paaren ausgewählt wird, wobei ein Schlüssel-Wert-Paar einen Schlüsselwert, der ein Attribut repräsentiert, und einen Schlüsselwert, der den Attributinhalt repräsentiert, umfasst, wobei die erste Vielzahl von Schlüssel-Wert-Paaren einem ersten Dienst entspricht, der von einem Dienstsystem bereitgestellt wird, wobei Anrufe, die ein oder mehrere Schlüssel-Wert-Paare der zu verarbeitenden Vielzahl von Schlüssel-Wert-Paaren enthalten, in einem Datenverarbeitungssystem (1) von dem Dienstsystem empfangen werden;
Zählen (S102) einer Häufigkeit, mit der ein Schlüssel-Wert-Paar aus dem Kandidatensatz innerhalb einer Zeitspanne vom Dienstsystem aufgerufen wird;
Anordnen (S103) der ersten Vielzahl von Schlüssel-Werte-Paaren nach der Frequenz;
Auswählen (S104) einer zweiten Vielzahl von Schlüssel-Wert-Paaren aus dem Kandidatensatz von Schlüssel-Wert-Paaren als die Vielzahl von Hotspot-Schlüssel-Wert-Paaren gemäß einer Screening-Regel, wobei die zweite Vielzahl von Schlüssel-Wert-Paaren mit maximalen Anrufhäufigkeiten ist, und wobei die erste Vielzahl größer als die zweite Vielzahl von Schlüssel-Wert-Paaren ist;
Zuordnen (S200) der Vielzahl von Hotspot-Schlüssel-Wert-Paaren, um Zwischenergebnis-Schlüssel-Wert-Paare zu erhalten, die den Hotspot-Schlüssel-Wert-Paaren entsprechen; und
Reduzieren (S300) der Zwischenergebnis-Schlüssel-Wert-Paare der Vielzahl von Hotspot-Schlüssel-Wert-Paaren, um Endergebnis-Schlüssel-Wert-Paare für Anrufe zu erzeugen, die vom Dienstsystem empfangen werden;
wobei das Verfahren ferner Folgendes umfasst:
Verarbeiten eines Anrufs vom Dienstsystem im Datenverarbeitungssystem, wobei der Anruf ein Schlüssel-Wert-Paar aus der zu verarbeitenden Vielzahl von Schlüssel-Wert-Paaren enthält, das nicht als Teil der Vielzahl von Hotspot-Schlüssel-Wert-Paaren ausgewählt ist, Folgendes umfassend:
Zuordnen des Schlüssel-Wert-Paares, um ein Zwischenergebnis-Schlüssel-Wert-Paar zu erhalten, das dem Schlüssel-Wert-Paar entspricht; und
Reduzieren des Zwischenergebnis-Schlüssel-Wert-Paares, um ein Endergebnis-Schlüssel-Wert-Paar für die Anrufe aus dem Servicesystem zu erzeugen.

2. Verfahren nach Anspruch 1, wobei das Auswählen (S104) der zweiten Vielzahl von Schlüssel-Wert-Paaren als die Vielzahl von Hotspot-Schlüssel-Wert-Paaren gemäß der Screening-Regel ferner Folgendes umfasst:
Festlegen eines Dienstkategorie-Bedingungssatzes von Kandidaten-Schlüssel-Wert-Paaren vor dem Schritt des zufälligen Auswählens der ersten Vielzahl von Schlüssel-Wert-Paaren aus der zu verarbeitenden Vielzahl von Schlüssel-Wert-Paaren als Kandidaten-Schlüssel-Wert-Paare; und
Auswählen von zu verarbeitenden Schlüssel-Wert-Paaren aus der zu verarbeitenden Vielzahl von Schlüssel-Wert-Paaren, die die festgelegte Dienstkategorie-Bedingung erfüllen.

3. Verfahren nach Anspruch 1, wobei das Auswählen (S104) der zweiten Vielzahl von Schlüssel-Wert-Paaren als die Vielzahl von Hotspot-Schlüssel-Wert-Paaren gemäß der Screening-Regel Folgendes umfasst:
Festlegen einer Anrufhäufigkeitsschwelle der Hotspot-Schlüssel-Wert-Paare; und
wenn die Anrufhäufigkeit eines Schlüssel-Wert-Paares größer ist als die Anrufhäufigkeitsschwelle, Festlegen des Schlüssel-Wert-Paares als Hotspot-Schlüssel-Wert-Paar.

4. Verfahren nach einem der Ansprüche 1 bis 3, wobei das Verfahren ferner das Optimieren der Screening-Regel durch Verwendung eines maschinellen Lernmodells umfasst, optional Folgendes umfassend:
Zählen einer Verteilungsbedingung der Anrufhäufigkeiten der Schlüssel-Wert-Paare gegenüber einem einzelnen Attribut durch Verwendung eines Clustering-Algorithmus im maschinellen Lernmodell;
entsprechend der Verteilungsbedingung der Anfrufhäufigkeiten der Schlüssel-Werte-Paare gegenüber einem einzelnen Attribut, Auswählen eines Intervalls von Schlüsselwerten des Attributinhalts, bei dem die Anfrufhäufigkeiten der Schlüssel-WertePaare nicht kleiner als eine voreingestellte Häufigkeitsschwelle sind; und
Festlegen des Intervalls der Schlüsselwerte des Attributinhalts als Regelbedingung der Screening-Regel.

5. Verfahren nach Anspruch 4, wobei das Verfahren ferner Folgendes umfasst:
wenn ein Schlüssel-Wert-Paar eines Attributs und ein Schlüssel-Wert-Paar eines anderen Attributs von Dienstsystemen mit demselben Dienstcode angerufen werden, Festlegen eines Einheitssatzes von Intervallen von Schlüsselwerten des Attributinhalts der Schlüssel-Wert-Paare der beiden Attribute als Regelbedingung der Screening-Regel.

6. Datenverarbeitungssystem (1), umfassend:
ein Screening-Modul (10), das in einem Vorverarbeitungsmodus konfiguriert ist, um in einem Vorverarbeitungsmodus eine erste Vielzahl von Schlüssel-Wert-Paaren einer zu verarbeitenden Vielzahl von Schlüssel-Wert-Paaren auszuwählen (S101), wobei die erste Vielzahl zufällig als ein Kandidatensatz von Schlüssel-Wert-Paaren ausgewählt wird, um eine Vielzahl von Hotspot-Schlüssel-Wert-Paaren zu bestimmen, wobei die erste Vielzahl von Schlüssel-Wert-Paaren einem ersten Dienst entspricht, der von einem Dienstsystem bereitgestellt wird, wobei Anrufe, die ein oder mehrere Schlüssel-Wert-Paare der zu verarbeitenden Vielzahl von Schlüssel-Wert-Paaren enthalten, in einem Datenverarbeitungssystem von dem Dienstsystem empfangen werden;
Zählhäufigkeit (S102), mit der ein Schlüssel-Wert-Paar aus dem Kandidatensatz innerhalb einer Zeitspanne vom Dienstleistungssystem angerufen wird (S102);
Anordnen (S103) der ersten Vielzahl von Schlüssel-Wert-Paaren entsprechend der Häufigkeit (S103);
Auswählen (S104) einer zweiten Vielzahl von Schlüssel-Wert-Paaren aus dem Kandidatensatz von Schlüssel-Wert-Paaren als die Vielzahl von Hotspot-Schlüssel-Wert-Paaren gemäß einer Screening-Regel, wobei die zweite Vielzahl von Schlüssel-Wert-Paaren mit maximalen Anrufhäufigkeiten ist;
ein Zuordnungsmodul (20), das so konfiguriert ist, dass es im Vorverarbeitungsmodus die Vielzahl von Hotspot-Schlüssel-Wert-Paaren zuordnet (S200), um Zwischenergebnis-Schlüssel-Wert-Paare zu erhalten, die den Hotspot-Schlüssel-Wert-Paaren entsprechen; und
ein Reduzierungsmodul (30), das so konfiguriert ist, dass es im Vorverarbeitungsmodus die Zwischenergebnis-Schlüssel-Wert-Paare der Vielzahl von Hotspot-Schlüssel-Wert-Paaren reduziert (S300), um Endergebnis-Schlüssel-Wert-Paare für Anrufe zu erzeugen, die von dem Dienstsystem empfangen werden;
wobei das Schlüssel-Wert-Paar einen Schlüsselwert, der ein Attribut repräsentiert, und einen Schlüsselwert, der den Attributinhalt repräsentiert, umfasst;
wobei das Zuordnungsmodul (20) konfiguriert ist, um in einem Verarbeitungsmodus einen Anruf von dem Dienstsystem zu verarbeiten, wobei der Anruf ein Schlüssel-Wert-Paar aus der zu verarbeitenden Vielzahl von Schlüssel-Wert-Paaren enthält, das nicht als Teil der Vielzahl von Hotspot-Schlüssel-Wert-Paaren ausgewählt ist, und um das Nicht-Hotspot-Schlüssel-Wert-Paar zuzuordnen, um ein Zwischenergebnis-Schlüssel-Wert-Paar zu erhalten, das dem Schlüssel-Wert-Paar entspricht; und
wobei das Reduzierungsmodul (30) so konfiguriert ist, dass es im Verarbeitungsmodus das Zwischenergebnis-Schlüssel-Wert-Paar reduziert, um ein Endergebnis-Schlüssel-Wert-Paar für die Anrufe vom Dienstsystem zu erzeugen.

7. System (1) nach Anspruch 6, wobei das Screening-Modul (10), das so konfiguriert ist, dass es die Vielzahl von Schlüssel-Wert-Paaren als die Vielzahl von Hotspot-Schlüssel-Wert-Paaren auswählt, ferner wie folgt konfiguriert ist:
Festlegen eines Dienstkategorie-Bedingungssatzes von Kandidaten-Schlüssel-Wert-Paaren vor dem Schritt des zufälligen Auswählens der ersten Vielzahl von Schlüssel-Wert-Paaren aus der zu verarbeitenden Vielzahl von Schlüssel-Wert-Paaren als Kandidaten-Schlüssel-Wert-Paare; und
Auswählen der zu verarbeitenden Schlüssel-Wert-Paare aus der zu verarbeitenden Vielzahl von Schlüssel-Wert-Paaren, die die festgelegte Dienstkategorie-Bedingung erfüllen.

8. System (1) nach Anspruch 6, wobei das Screening-Modul (10), das so konfiguriert ist, dass es die zweite Vielzahl von Schlüssel-Wert-Paaren als die Vielzahl von Hotspot-Schlüssel-Wert-Paaren auswählt, wie folgt konfiguriert ist:
Festlegen einer Anrufhäufigkeitsschwelle der Hotspot-Schlüssel-Wert-Paare; und
wenn die Anrufhäufigkeit eines Schlüssel-Wert-Paares größer ist als die Anrufhäufigkeitsschwelle, Festlegen des Schlüssel-Wert-Paares als Hotspot-Schlüssel-Wert-Paar.

9. System (1) eines der Ansprüche 6 bis 8, wobei das System ferner ein Regeloptimierungsmodul (40) umfasst, das wie folgt konfiguriert ist:
Optimieren der Screening-Regel durch Verwendung eines maschinellen Lernmodells.

10. System (1) nach Anspruch 9, wobei das Regeloptimierungsmodul (40) wie folgt konfiguriert ist:
Zählen einer Verteilungsbedingung der Anrufhäufigkeiten der Schlüssel-Wert-Paare im Vergleich zu einem einzelnen Attribut durch Verwendung eines Clustering-Algorithmus im maschinellen Lernmodell;
entsprechend der Verteilungsbedingung der Anrufhäufigkeiten der Schlüssel-Wert-Paare gegenüber einem einzelnen Attribut, Auswählen eines Intervalls von Schlüsselwerten des Attributinhalts, bei dem die Anrufhäufigkeiten der Schlüssel-Wert-Paare nicht kleiner als eine voreingestellte Häufigkeitsschwelle sind; und
Festlegen des Intervalls der Schlüsselwerte des Attributinhalts als Regelbedingung der Screening-Regel.

11. System (1) nach Anspruch 10, wobei das Regeloptimierungsmodul (40) ferner wie folgt konfiguriert ist:
wenn ein Schlüssel-Wert-Paar eines Attributs und ein Schlüssel-Wert-Paar eines anderen Attributs von Dienstsystemen mit demselben Dienstcode angerufen werden, Festlegen eines Einheitssatzes von Intervallen von Schlüsselwerten des Attributinhalts der Schlüssel-Wert-Paare der beiden Attribute als Regelbedingung der Screening-Regel.

## Revendications

1. Procédé de traitement de données, le procédé comprenant :
le pré-traitement d'une pluralité de paires clé-valeur de point d'accès sans fil, comprenant :
la sélection (S101) d'une première pluralité de paires clé-valeur d'une pluralité de paires clé-valeur à traiter, la première pluralité étant sélectionnée aléatoirement comme ensemble candidat de paires clé-valeur servant à déterminer la pluralité de paires clé-valeur de point d'accès sans fil, une paire clé-valeur comprenant une valeur clé représentant un attribut et une valeur clé représentant un contenu d'attribut, la première pluralité de paires clé-valeur correspondant à un premier service fourni par un système de service, des appels comportant une ou plusieurs des paires clé-valeur de la pluralité de paires clé-valeur à traiter étant reçus au niveau d'un système de traitement de données (1) en provenance du système de service ;
le comptage (S102) d'une fréquence à laquelle une paire clé-valeur parmi l'ensemble candidat est appelée, par le système de service, dans les limites d'un laps de temps ;
l'agencement (S103) de la première pluralité de paires clé-valeur selon la fréquence ;
la sélection (S104) d'une seconde pluralité de paires clé-valeur issues de l'ensemble candidat de paires clé-valeur comme pluralité de paires clé-valeur de point d'accès sans fil selon une règle de filtrage, la seconde pluralité de paires clé-valeur ayant des fréquences d'appel maximales, et la première pluralité étant supérieure à la seconde pluralité de paires clé-valeur ;
le mappage (S200) de la pluralité de paires clé-valeur de point d'accès sans fil afin d'obtenir des paires clé-valeur de résultat intermédiaire correspondant aux paires clé-valeur de point d'accès sans fil ; et
la réduction (S300) des paires clé-valeur de résultat intermédiaire de la pluralité de paires clé-valeur de point d'accès sans fil afin de générer des paires clé-valeur de résultat final pour des appels reçus en provenance du système de service ;
le procédé comprenant en outre :
le traitement d'un appel provenant du système de service au niveau du système de traitement de données, l'appel comportant une paire clé-valeur de la pluralité de paires clé-valeur à traiter qui n'est pas sélectionnée comme faisant partie de la pluralité de paires clé-valeur de point d'accès sans fil, comprenant :
le mappage de la paire clé-valeur afin d'obtenir une paire clé-valeur de résultat intermédiaire correspondant à la paire clé-valeur ; et
la réduction de la paire clé-valeur de résultat intermédiaire afin de générer une paire clé-valeur de résultat final pour les appels provenant du système de service.

2. Procédé selon la revendication 1, dans lequel la sélection (S104) de la seconde pluralité de paires clé-valeur comme pluralité de paires clé-valeur de point d'accès sans fil selon la règle de filtrage comprend en outre :
l'établissement d'un ensemble de conditions de catégorie de service de paires clé-valeur candidates avant l'étape de sélectionaléatoire de la première pluralité de paires clé-valeur de la pluralité de paires clé-valeur à traiter comme paires clé-valeur candidates ; et
la sélection de paires clé-valeur à traiter issues de la pluralité de paires clé-valeur à traiter satisfaisant l'ensemble de conditions de catégorie de service.

3. Procédé selon la revendication 1, dans lequel la sélection (S104) de la seconde pluralité de paires clé-valeur comme pluralité de paires clé-valeur de point d'accès sans fil selon la règle de filtrage comprend :
l'établissement d'un seuil de fréquence d'appel des paires clé-valeur de point d'accès sans fil ; et
lorsque la fréquence d'une paire clé-valeur étant appelée est supérieure au seuil de fréquence d'appel, l'établissement de la paire clé-valeur comme paire clé-valeur de point d'accès sans fil.

4. Procédé selon l'une quelconque des revendications 1 à 3, dans lequel le procédé comprend en outre l'optimisation de la règle de filtrage en utilisant un modèle d'apprentissage automatique, comprenant facultativement :
le comptage d'une condition de distribution de fréquences des paires clé-valeur étant appelées par rapport à un seul attribut en utilisant un algorithme de groupement dans le modèle d'apprentissage automatique ;
selon la condition de distribution de fréquences des paires clé-valeur étant appelées par rapport à un seul attribut, la sélection d'un intervalle de valeurs clés du contenu d'attribut auquel les fréquences des paires clé-valeur étant appelées ne sont pas inférieures à un seuil de fréquence préétabli ; et
l'établissement de l'intervalle de valeurs clés du contenu d'attribut comme condition de règle de la règle de filtrage.

5. Procédé selon la revendication 4, dans lequel le procédé comprend en outre :
lorsqu'une paire clé-valeur d'un attribut et une paire clé-valeur d'un autre attribut sont appelées par des systèmes de service ayant le même code de service, l'établissement d'un ensemble d'union d'intervalles de valeurs clés de contenu d'attribut des paires clé-valeur des deux attributs comme condition de règle de la règle de filtrage.

6. Système de traitement de données (1), comprenant :
un module de filtrage (10) configuré, en un mode pré-traitement, pour
sélectionner (S101) une première pluralité de paires clé-valeur d'une pluralité de paires clé-valeur à traiter, la première pluralité étant sélectionnée aléatoirement comme ensemble candidat de paires clé-valeur servant à déterminer une pluralité de paires clé-valeur de point d'accès sans fil, la première pluralité de paires clé-valeur correspondant à un premier service fourni par un système de service, des appels comportant une ou plusieurs paires clé-valeur de la pluralité de paires clé-valeur à traiter étant reçus dans un système de traitement de données en provenance du système de service ;
compter (S102) une fréquence à laquelle une paire clé-valeur parmi l'ensemble candidat est appelée dans les limites d'un laps de temps par le système de service (S102) ;
agencer (S103) la première pluralité de paires clé-valeur selon la fréquence (S103) ;
sélectionner (S104) une seconde pluralité de paires clé-valeur issues de l'ensemble candidat de paires clé-valeur comme pluralité de paires clé-valeur de point d'accès sans fil selon une règle de filtrage, la seconde pluralité de paires clé-valeur ayant des fréquences d'appel maximales ;
un module de mappage (20) configuré, en mode pré-traitement, pour mapper (S200) la pluralité de paires clé-valeur de point d'accès sans fil afin d'obtenir des paires de valeurs-clés de résultat intermédiaire correspondant aux paires clé-valeur de point d'accès sans fil ; et
un module de réduction (30) configuré, en mode pré-traitement, pour réduire (S300) les paires clé-valeur de résultat intermédiaire de la pluralité de paires clé-valeur de point d'accès sans fil afin de générer des paires clé-valeur de résultat final pour des appels reçus en provenance du système de service ;
la paire clé-valeur comprenant une valeur clé représentant un attribut et une valeur clé représentant un contenu d'attribut ;
le module de mappage (20) étant configuré, en un mode traitement, pour traiter un appel provenant du système de service, l'appel comportant une paire clé-valeur issue de la pluralité de paires clé-valeur à traiter qui n'est pas sélectionnée comme faisant partie de la pluralité de paires clé-valeur de point d'accès sans fil, et pour mapper la paire clé-valeur ne correspondant pas à un point d'accès sans fil pour obtenir une paire clé-valeur de résultat intermédiaire correspondant à la paire clé-valeur ; et
le module de réduction (30) étant configuré, en mode traitement, pour réduire la paire clé-valeur de résultat intermédiaire afin de générer une paire clé-valeur de résultat final pour les appels provenant du système de service.

7. Système (1) selon la revendication 6, dans lequel le module de filtrage (10) configuré pour sélectionner la pluralité de paires clé-valeur comme pluralité de paires clé-valeur de point d'accès sans fil est en outre configuré pour :
établir un ensemble de conditions de catégorie de service de paires clé-valeur candidates avant l'étape de sélection aléatoire de la première pluralité de paires clé-valeur de la pluralité de paires clé-valeur à traiter comme paires clé-valeur candidates ; et
sélectionner des paires clé-valeur à traiter issues de la pluralité de paires clé-valeur à traiter satisfaisant l'ensemble de conditions de catégorie de service.

8. Système (1) selon la revendication 6, dans lequel le module de filtrage (10) configuré pour sélectionner la seconde pluralité de paires clé-valeur comme pluralité de paires clé-valeur de point d'accès sans fil est configuré pour :
établir un seuil de fréquence d'appel des paires clé-valeur de point d'accès sans fil ; et
lorsque la fréquence d'une paire clé-valeur étant appelée est supérieure au seuil de fréquence d'appel, établir la paire clé-valeur comme paire clé-valeur de point d'accès sans fil.

9. Système (1) selon l'une quelconque des revendications 6 à 8, dans lequel le système comprend en outre un module d'optimisation de règle (40) configuré pour :
optimiser la règle de filtrage en utilisant un modèle d'apprentissage automatique.

10. Système (1) selon la revendication 9, dans lequel le module d'optimisation de règle (40) est configuré pour :
compter une condition de distribution de fréquences des paires clé-valeur étant appelées par rapport à un seul attribut en utilisant un algorithme de groupement dans le modèle d'apprentissage automatique ;
selon la condition de distribution de fréquences des paires clé-valeur étant appelées par rapport à un seul attribut, sélectionner un intervalle de valeurs clés de contenu d'attribut auquel les fréquences des paires clé-valeur étant appelées ne sont pas inférieures à un seuil de fréquence préétabli ; et
établir l'intervalle des valeurs clés de contenu d'attribut comme condition de règle de la règle de filtrage.

11. Système (1) selon la revendication 10, dans lequel le module d'optimisation de règle (40) est en outre configuré pour :
lorsqu'une paire clé-valeur d'un attribut et une paire clé-valeur d'un autre attribut sont appelées par des systèmes de service ayant le même code de service, établir un ensemble d'union d'intervalles de valeurs clés de contenu d'attribut des paires clé-valeur des deux attributs comme condition de règle de la règle de filtrage.
